**Europäisches Patentamt**

**European Patent Office**

**Office européen des brevets**

(19)

(11) Numéro de publication: **0 392 416**
**A1**

## DEMANDE DE BREVET EUROPEEN

(12)

(21) Numéro de dépôt: **90106745.4**

(22) Date de dépôt: **09.04.90**

(51) Int. Cl.5: **H03H 2/00, H01Q 3/26**

(30) Priorité: **13.04.89 FR 8904908**

(43) Date de publication de la demande:
**17.10.90 Bulletin 90/42**

(84) Etats contractants désignés:
**DE FR GB IT**

(71) Demandeur: **ALCATEL N.V.**
**Strawinskylaan 341 (World Trade Center)**
**NL-1077 XX Amsterdam(NL)**

(72) Inventeur: **Chesnoy, José**

**22, rue Emile Dubois**
**F-75014 Paris(FR)**
Inventeur: **Torchin, Lucien**
**19, rue des Cordelières**
**F-75013 Paris(FR)**
Inventeur: **Biet, Michel**
**13, rue du Périgord**
**F-91300 Massy(FR)**

(74) Mandataire: **Weinmiller, Jürgen et al**
**Lennéstrasse 9 Postfach 24**
**D-8133 Feldafing(DE)**

(54) **Procédé pour appliquer un retard commande à un signal notamment d'hyperfrequence, dispositif retardeur, système de transmission optique et système d'antènne appliquant ce procédé.**

(57) La présente invention permet notamment d'affecter un signal hyperfréquence d'un retard commandable continûment et rapidement dans une large plage et ceci à l'aide d'un dispositif simple. Ce signal est appliqué pour cela à un modulateur (4) pour moduler une onde optique fournie par un laser accordable (2). Le signal optique ainsi modulé est transmis par une fibre optique fortement dispersive (10) à un récepteur opto-électrique (12) qui restitue un signal hyperfréquence retardé. La variation du retard est commandée par variation de la fréquence d'émission du laser (2).

L'invention s'applique notamment à la réalisation d'un système d'antenne à réseau.

# FIG. 1

## Procédé pour appliquer un retard commandé à un signal notamment d'hyperfréquence, dispositif retardateur, système de transmission optique et système d'antenne appliquant ce procédé.

La présente invention concerne l'application d'un retard commandé à un signal, notamment à un signal électrique d'hyperfréquence, ce dernier étant éventuellement modulé par un signal porteur d'information et/ou utilisé dans un système d'antenne à réseau.

Un dispositif retardateur connu pour appliquer un tel retard comporte certains éléments qui lui sont communs, quant aux fonctions indiquées ci-après, avec un dispositif selon la présente invention. Ces éléments communs sont :
- un émetteur optique modulable en intensité pour recevoir un signal à retarder constituant un signal d'entrée et pour fournir en réponse un signal optique modulé par ce signal d'entrée,
- une fibre optique retardatrice pour recevoir en entrée ledit signal optique modulé et pour le guider en lui appliquant un retard,
- un récepteur pour recevoir ledit signal optique modulé en sortie de ladite fibre optique retardatrice et pour fournir un signal de sortie représentatif de la modulation qui affectait ce signal optique,
- et des moyens de commande de retard pour commander ledit retard appliqué par ladite fibre optique retardatrice.
Ledit signal optique modulé étant constitué par la modulation d'une onde porteuse optique, le retard qui lui est appliqué est égal au temps de propagation de cette onde porteuse sur la longueur de ladite fibre retardatrice.

L'ensemble partiel formé par cette fibre et lesdits moyens de commande de retard constitue ce que l'on appelle généralement une "ligne à retard variable". Le besoin de tels dispositifs optoélectroniques dans le domaine des hyperfréquences a été souvent évoqué comme cela résulte de divers documents connus qui sont indiqués en fin de la présente description, en particulier des documents numérotés 1 et 2.

Les variations du temps de propagation de l'onde porteuse dans la fibre retardatrice peuvent être discrètes grâce à une commuta tion de fibres de diverses longueurs. Elles peuvent aussi être continues. Une telle variation continue peut être obtenue soit par une variation de la longueur d'une fibre unique, soit par une variation de l'indice de réfraction effectif vu par l'onde porteuse dans une telle fibre. Deux dispositions seulement ont été décrites pour obtenir une variation continue : Selon l'une de ces dispositions on commande la longueur de la fibre par enroulement de celle-ci sur un mandrin cylindrique piézoélectrique et par application d'un champ électrique commandé à ce mandrin. Selon l'autre on utilise une fibre multimode et on fait varier l'indice de réfraction effectif par sélection des modes de propagation de l'onde porteuse dans cette fibre (voir document 9).

On va tout d'abord examiner les lignes à retard connues prévues pour appliquer des retards discrets :

En utilisant des commutateurs électro-optiques permettant de changer de fibre retardatrice à l'aide d'une commande électrique, un changement discret du retard peut être obtenu. Le nombre des retards susceptibles d'être ainsi obtenus est petit si l'on utilise un seul étage de commutation (voir document 3). Il est plus important si l'on connecte en cascade plusieurs étages de commutateurs de fibres (voir document 8), mais une variation continue de phase reste impossible. De plus une telle ligne à retard nécessite la propagation du signal optique à travers plusieurs commutateurs électro-optiques ce qui provoque de fortes pertes d'insertion. D'autre part, si une telle ligne à retard doit offrir un grand choix de retards possibles, son poids sera important puisque chaque retard est obtenu à l'aide d'une fibre différente. Et on rencontrera des difficultés pratiques pour échelonner précisément les longueurs des fibres retardatrices si l'on souhaite obtenir un incrément fixe entre chaque retard.

On va maintenant examiner les lignes à retard connues prévues pour obtenir un changement du retard par élongation de la fibre retardatrice :

L'enroulement d'une fibre optique sur un mandrin piézoélectrique donne un moyen de commander la longueur d'une fibre par une commande électrique (voir document 4 et 9). Des variations relatives de longueur de l'ordre de $10^{-3}$ pourraient être obtenues par cette méthode, ce qui permettrait d'atteindre un retard de 100 ps avec quelques dizaines de mètres de fibre. Une telle ligne à retard permet donc d'obtenir continûment de grands retards. Divers inconvénients sont néanmoins à noter : les hautes tensions de commande nécessaires (de l'ordre du kilovolt), l'hystérésis de l'élongation piézolélectrique, et aussi le fait que la bande passante de la commande du retard est limitée par l'inertie mécanique du mandrin (au mieux quelques dizaines de kilohertz). Une telle ligne à retard présente de plus une consommation importante d'énergie en régime dynamique, cette consommation étant due aux fortes capacités des éléments piézoélectriques. Le poids d'un tel dispositif ne sera pas constitué par la seule longueur de fibre nécessaire, mais aussi par le mandrin piézoélectrique. Il sera donc important. Dans l'expérience décrite la fréquence hyperfréquence est de 10 GHz, le déphasage produit de 20° (soit 5,55 ps ou 1,11 mm). Une optimisation permettrait potentiellement d'atteindre 63 ps.

On va enfin examiner les lignes à retard connues dans lesquelles un changement d'indice permet de commander le retard :

L'écart d'indice entre coeur et gaine d'une fibre multimode atteint couramment $10^{-2}$ ; des différences de temps de propagation considérables peuvent être obtenues sur de courtes longueurs de fibre. Par exemple, 3 m (voir document 2). Le changement de modes est obtenu par des moyens mécaniques, des microcourbures étant induites par un dispositif piézoélectrique. Les inconvénients sont donc similaires à ceux des lignes à retard qui utilisent une élongation de la fibre retardatrice, le poids étant cependant réduit. Des inconvénients supplémentaires sont le risque de couplage de modes, et les pertes dues aux microcourbures. L'expérience décrite pour la variation du temps de propagation de groupe est une transmission à 7 GHz avec un déphasage de 15°.

La présente invention a notamment pour buts :
- de permettre d'élargir la bande des fréquences de commande du retard qui est appliqué au signal à retarder,
- de commander ce retard en n'utilisant pour cela sensiblement aucune fibre optique autre qu'une fibre optique de transmission utilisée pour transmettre ce signal à retarder d'une zone d'entrée où il est reçu sous la forme dudit signal d'entrée à une zone de sortie qui est distante de cette zone d'entrée et où ce signal à retarder doit être restitué sous la forme dudit signal de sortie,
- de commander ce retard avec le même nombre de composants que pour réaliser un retard fixe,
- de commander ce retard sans augmenter sensiblement les pertes d'énergie du signal,
- de commander ce retard à l'aide d'un dispositif de faibles poids, encombrement et consommation d'énergie,
- de commander ce retard à l'aide d'un dispositif simple et peu coûteux n'utilisant que des tensions électriques modérées,
- et/ou de commander ce retard d'une manière continue dans une large plage de retards.

La présente invention a notamment pour objet un procédé pour appliquer un retard commandé à un signal modulant l'intensité d'une onde porteuse optique, caractérisé par le fait qu'on commande la fréquence de ladite onde porteuse et qu'on injecte cette dernière dans un guide d'ondes optiques dispersif.

Elle a aussi pour objet un dispositif retardateur commandé qui comporte les éléments communs précédemment mentionnés, et qui, selon la présente invention, peut présenter certaines au moins des dispositions préférées suivantes :

- L'émetteur optique comporte ;
- une source optique accordable pour fournir un signal optique à fréquence commandée,
- et des moyens de modulation pour que ledit signal optique à fréquence commandée soit modulé par ledit signal d'entrée,
- lesdits moyens de commande de retard comportant des moyens de commande de fréquence pour commander la fréquence optique de ladite source optique dans une bande de fréquences optiques de service,
- ladite fibre optique retardatrice présentant une dispersion chromatique de vitesse de groupe sensible dans ladite bande de fréquences optiques de service.
- Ladite fibre optique retardatrice présente un coefficient de dispersion supérieur à 15 ps/nm.km.
- Ladite source optique accordable est un laser semi-conducteur multisection.
- Lesdits moyens de modulation comportent un modulateur externe recevant et modulant un faisceau optique émis par ce laser semi-conducteur, étant entendu que, dans la mesure où la source optique pourrait être aisément modulée directement, on éviterait avantageusement l'utilisation d'un tel modulateur externe.

La présente invention a également pour objet un système de transmission pour transmettre un signal d'une zone d'entrée à une zone de sortie à distance de cette zone d'entrée, ce signal constituant un signal à transmettre et devant être retardé de manière commandée, ce système de transmission comportant une fibre optique de transmission s'étendant de cette zone d'entrée à cette zone de sortie pour transmettre ce signal sous une forme optique, ce système étant caractérisé par le fait qu'il constitue un dispositif retardateur selon l'une quelconque desdites dispositions préférées, ledit signal à retarder étant constitué par ledit signal à transmettre, et ladite fibre optique retardatrice étant constituée par ladite fibre optique de transmission.

La présente invention a encore pour objet un système d'antenne à réseau.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence. Le mode de mise en oeuvre donné en exemple comporte les dispositions préférées décrites ci-dessus. En ce qui concerne les éléments qui ont été mentionnés à propos de ces dispositions, les signes de référence qui les désignent vont être indiqués après une brève description des figures :

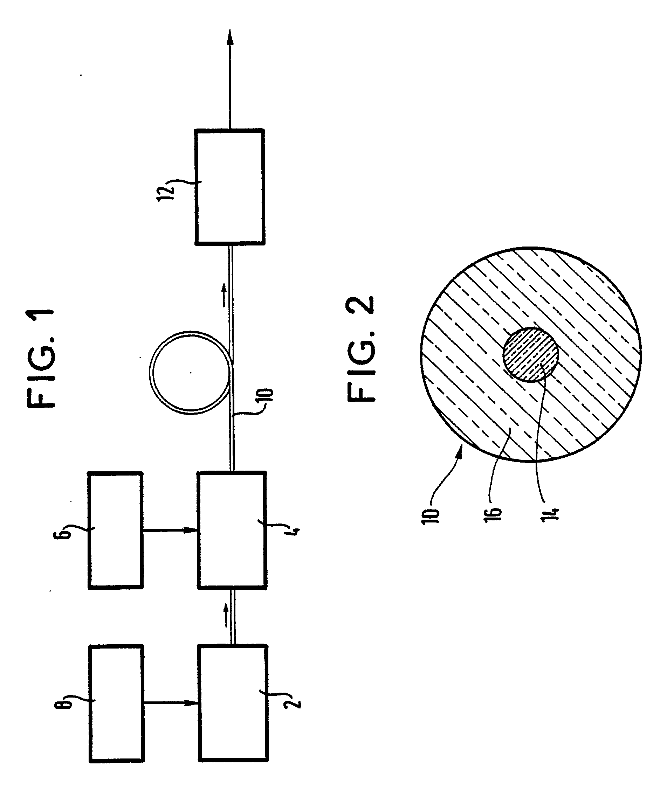

La figure 1 représente une vue d'un dispositif retardateur selon la présente invention.

La figure 2 représente une vue en coupe d'une fibre optique retardatrice de ce retardateur.

La figure 3 représente une vue d'un système d'antenne à réseau selon la présente invention.

Sur ces figures les signes de référence sont comme suit :
- Laser semi-conducteur multisection 2 constituant ladite source accordable.
- Moyens de modulation 4 constitués par un modulateur électro-optique d'intensité recevant ledit signal à retarder à partir d'un circuit d'entrée 6.
- Moyens de commande de retard et de fréquence 8 commandant la fréquence du laser 2.
- Fibre optique retardatrice 10 avec un coeur 14 et une gaine optique 16 (Fig.2).
- Moyens de réception 12 constitués par un récepteur opto-électrique.

En ce qui concerne la source optique 2, tout laser accordable sur une plage d'au moins 2 nm est utilisable. On peut notamment utiliser un laser analogue au laser DFB à trois électrodes qui est décrit dans le document 5. Il émet à 1530 nm. Sa plage d'accordabilité continue est de 2 nm. La bande passante pour la modulation de fréquence optique de ce laser est supérieure à 1 GHz et détermine la bande passante pour la commande du retard. Des lasers de ce genre semblent pouvoir être réalisés pour éméttre à d'autres longueurs d'onde, par exemple voisines de 1300 nm.

En ce qui concerne le modulateur d'intensité 4, de tels dispositifs sont disponibles commercialement aux fréquences hyperfréquence. Par exemple, la société américaine Crystal Technology réalise des modulateurs d'intensité dont la bande passante est 10 GHz. En laboratoire, des bandes passantes de 40 GHz sont annoncées (voir document 6).

En ce qui concerne la fibre retardatrice 10, elle est choisie en considérant que la plage de variation de retard recherchée est égale au produit de trois termes qui sont :
- la dispersion de la fibre, c'est-à-dire, plus précisément le coefficient de dispersion de vitesse de groupe au voisinage de la longueur d'onde moyenne utilisée,
- la longueur de la fibre,
- et la plage d'accord en longueur d'onde de la source optique utilisé.

En ce qui concerne plus particulièrement la dispersion, on sait que la dispersion chromatique d'une fibre monomode résulte de la superposition de deux effets ; l'effet du matériau et l'effet du guide (voir le livre de L.B. JEUNHOMME "Single Mode Fiber Optics " édité par Marcel DEKKER (New-York 1983). Habituellement, ces deux effets sont utilisés de manière qu'à la longueur d'onde moyenne utilisée les coefficients de dispersion correspondants se compensent. Selon la présente invention, au contraire, on peut chercher à éviter une telle compensation pour obtenir une valeur aussi grande que possible de la dispersion et limiter ainsi la longueur de la fibre.

Pour cela, dans le cas où la longueur d'onde moyenne utilisée est voisine de 1530 nm, la fibre étant réalisée à base de silice, on cherche à conserver autant que possible la dispersion naturelle de ce matériau. Ceci est obtenu en réalisant des fibres dont le coeur est constitué de silice pure ou faiblement dopée, leur gaine optique étant dopée, par exemple à l'aide de fluor pour abaisser son indice de réfraction. Les dispersions couramment obtenues sont de 18 ps/nm.km.

Dans le cas où la longueur d'onde utlisée est voisine de 1300 nm on cherche à cumuler les deux effets précédemmment mentionnés. Des fibres réalisées pour cela ont un fort dopage de leur coeur en oxyde de germanium $GeO_2$ (écart d'indice maximum de 0,03) et un petit diamètre du coeur (4000 nm). Les dispersions obtenues couramment sont de 50 ps/nm.km.

Dans le cas cependant où le signal à retarder doit, indépendamment du retard que l'on veut lui appliquer, être transmis sous forme optique dans une fibre de grande longueur, il peut être inutile de prendre des dispositions pour augmenter la dispersion de la fibre.

Quant au récepteur optoélectrique 12 il peut être constitué d'un photodétecteur rapide disponible dans le commerce.

En ce qui concerne le système de transmission selon l'invention, il est constitué par le dispositif retardateur qui vient d'être décrit, dans le cas où une zone d'entrée comportant les éléments 2, 4, 6 et 8 est éloignée d'une zone de sortie comportant le récepteur 12.

Un retard commandé selon la présente invention peut être cumulé avec un retard commandé selon une autre méthode, en particulier quand la longueur que l'on peut donner à une fibre de transmission est trop petite pour que cette invention permette à elle seule d'obtenir un retard suffisant même si cette fibre est choisie fortement dispersive. La complémentarité possible avec la méthode connue d'enroulement sur un mandrin piézoélectrique peut être mise à profit dans ce cas pour obtenir un grand retard avec une faible bande passante de commande, ce grand retard étant complété par un petit retard obtenu selon la présente invention et commandé avec une grande bande passante.

Comme précédemment indiqué la présente invention a encore pour objet un système d'antenne à réseau.

Le principe de tels systèmes est connu depuis longtemps (voir document 7). Pour l'émission ils sont constitués d'un réseau de sources rayonnantes constituant des antennes élémentaires et alimentées en énergie hyperfréquence par l'intermédiaire de déphaseurs. Si la variation de phase le long du réseau suit une progression linéaire, une onde plane est générée. Son orientation est fonction des déphasages. Le plus grand déphasage nécessaire dépend de la dimension du réseau. Il peut varier d'une à plusieurs longueurs d'ondes hyperfréquences.

Pour de nombreuses raisons, en particulier le poids et l'encombrement, les guides d'ondes ou câbles coaxiaux peuvent être remplacés par des liaisons optiques pour assurer la distribution du signal hyperfréquence à l'intérieur du système (voir document 2). Le déphasage peut être réalisé soit sur des ondes optiques, soit dans le domaine hyperfréquence. Les techniques optiques permettent potentiellement un gain de poids et des retards plus importants indépendants de la fréquence hyperfréquence ce qui est avantageux dans des systèmes à large bande.

Un système d'antenne à réseau fonctionne aussi en réception ; dans ce cas, c'est la direction d'observation qui est sélectionnée par le choix des déphasages.

Selon la présente invention de tels déphasages peuvent, aussi bien en émission qu'en réception, être réalisés sous la forme de dits retards appliqués par des dispositifs retardateurs tels que précédemment décrit.

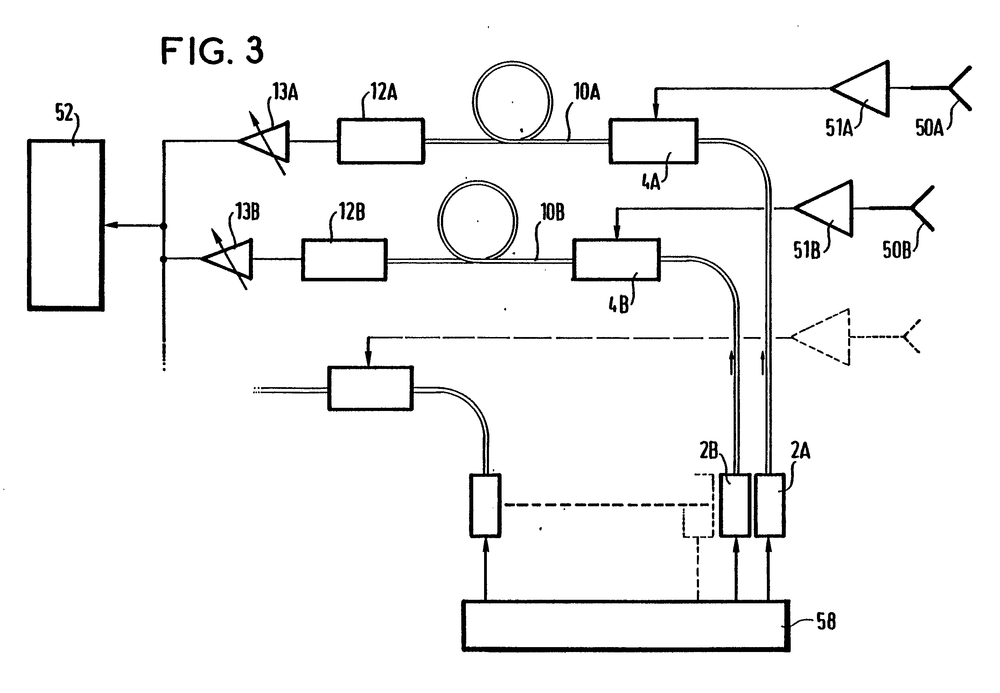

De manière générale un système d'antenne à réseau selon la présente invention peut comporter les éléments suivants (voir fig.3) qui sont connus pour les fonctions indiquées :
- un réseau d'antennes élémentaires 50A, 50B... pour émettre ou recevoir des ondes radioélectriques libres d'hyperfréquences en recevant ou en fournissant des signaux électriques d'hyperfréquences correspondant à ces ondes, respectivement,
- un circuit central 52 pour émettre ou recevoir lesdits signaux électriques d'hyperfréquences vers ou à partir desdites antennes élémentaires, respectivement,
- et des lignes composites 2A, 4A, 10A, 12A, 2B, 4B, 10B, 12B correspondant respectivement auxdites antennes élémentaires pour transmettre chacune lesdits signaux électriques d'hyperfréquences avec un retard commandé entre ladite antenne élémentaire correspondante et ledit circuit central, chacune de ces lignes composites 2A, 4A, 10A, 12A comportant elle même :
- un émetteur électro-optique modulable 2A, 4A pour recevoir un signal d'entrée constitué par un dit signal électrique d'hyperfréquence et pour fournir en réponse un signal optique modulé par ce signal d'entrée,
- une fibre optique retardatrice 10A pour recevoir en entrée ledit signal optique modulé et pour le guider en lui appliquant un retard,
- un récepteur optoélectrique 12A pour recevoir ledit signal optique modulé en sortie de ladite fibre optique retardatrice et pour fournir un dit signal électrique d'hyperfréquence constituant un signal de sortie représentatif de la modulation qui affectait ce signal optique,
- et des moyens de commande de retard pour commander ledit retard appliqué par ladite fibre optique retardatrice.

Ledit émetteur électro-optique modulable comporte avantageusement, selon la présente invention :
- une source optique accordable 2A pour fournir un signal optique à fréquence commandée,
- et des moyens de modulation 4A pour que ledit signal optique à fréquence commandée soit modulé par ledit signal d'entrée,
- lesdits moyens de commande de retard comportant des moyens de commande de fréquence 58 pour commander la fréquence optique de - ladite source optique dans une bande de fréquences optiques de service,
ladite fibre optique retardatrice 10A présentant une dispersion chromatique sensible dans ladite bande de fréquences optiques de service.

La figure 3 représente un exemple d'un tel système utilisé en réception.

Conformément à cette figure un premier élément d'antenne 50A applique, par l'intermédiaire d'un amplificateur hyperfréquence 51A, un dit signal d'entrée à un modulateur électro-optique tel que 4A en entrée d'une première ligne composite. Ce modulateur constitue desdits moyens de modulation. Il fait partie d'un émetteur optique comportant en outre un laser semi-conducteur multisection 2A constituant une dite source accordable.

Après transmission par une fibre transmettrice et retardatrice 10A, le signal modulé par le modulateur 4A est reçu par un récepteur opto-électrique 12A, en sortie de la ligne composite, qui fournit un signal de sortie hyperféquence retardé par rapport au signal d'entrée.

Après amplification dans un amplificateur commandable 13A ce signal de sortie est appliqué au circuit central 52.

Un deuxième élément d'antenne et une deuxième ligne composite correspondante comportant des éléments analogues désignés par les mêmes numéros de référence mais avec la lettre B au lieu de la lettre A.

D'autres éléments d'antenne et lignes composites ne sont pas représentés.

Les fréquences des lasers 2A, 2B etc... sont commandées par un processeur 58 en fonction de la direction d'observation souhaitée.

La grande bande passante des dispositifs retardateurs utilisés dans ce système d'antenne permet de commuter très rapidement la direction d'émission (ou de réception) vers plusieurs cibles (ou émetteurs). Elle permet aussi d'asservir une direction moyenne de pointage en utilisant une méthode de modulation de direction analogue à celle utilisée en optique pour les miroirs à adaptation de phase.

Les documents auxquels il a été fait référence ci-dessus sont les suivants :

(1) W.M. BRUNO, W.E. STEPHENS and T.R. JOSEPH, SPIE, vol 756, p 142 (1987).

(2) SPIE, vol 886 (1988) (Sessions 7 et 8).

(3) M. KONDO, K. KOMATSU, Y.OHTA, S.SUZAKI, K. NAKASHIMA and H. GOTO, 100C 83, technical Digest, p 437.

(4) N.V. JESPERSEN, A.C. HEATH and E.S. ROLLER, SPIE, vol 756, p 156 (1987).

(5) D. LECLERC, J. JACQUET, D. SIGOGNE, C. LABOURIE, Y. LOUIS, C. ARTIGUE et J. BENOIT, Elec. Letters, n° 25, p 45 (1989).

(6) D.W. DOLFI, M. NAKARATHY and R.L. JUNGERMAN, Elec. Letters, N° 24, p.529 (1988).

(7) S. DRABOWITCH, Chapitre XIV, Masson Ed.

(8) R.A. SOREF, "Programmable time-delay devices", Applied Optics, vol.23, n° 21, November 1st, 1984, pp 3736-3737.

(9) P.R. HERCZFELD et al., "Wide-band true time delay phase shifter devices", Proc.IEEE MTT-5 International Microwave Symposium Digest, Las Vegas, Na.; June 1987, PP 603-606.

## Revendications

1/ Procédé pour appliquer un retard commandé à un signal modulant une onde porteuse optique, caractérisé par le fait qu'on commande la fréquence de ladite onde porteuse et qu'on injecte cette dernière dans un guide d'ondes optiques dispersif (10).

2/ Dispositif retardateur commandé comportant :
- un émetteur optique modulable en intensité pour recevoir un signal à retarder constituant un signal d'entrée et pour fournir en réponse un signal optique modulé par ce signal d'entrée,
- une fibre optique retardatrice (10) pour recevoir en entrée ledit signal optique modulé et pour le guider en lui appliquant un retard,
- un récepteur (12) pour recevoir ledit signal optique modulé en sortie de ladite fibre optique retardatrice et pour fournir un signal de sortie représentatif de la modulation qui affectait ce signal optique,
- et des moyens de commande de retard pour commander ledit retard appliqué par ladite fibre optique retardatrice,
- ce dispositif retardateur étant caractérisé par le fait que ledit émetteur optique comporte :

- une source optique accordable (2) pour fournir un signal optique à fréquence commandée,
- et des moyens de modulation (4) pour que ledit signal optique à fréquence commandée soit modulé par ledit signal d'entrée,
- lesdits moyens de commande de retard comportant des moyens de commande de fréquence (8) pour commander la fréquence optique de ladite source optique dans une bande de fréquences optiques de service,
- ladite fibre optique retardatrice (10) présentant une dispersion chromatique de vitesse de groupe sensible dans ladite bande de fréquences optiques de service.

3/ Dispositif retardateur selon la revendication 2, caractérisé par le fait que ladite fibre optique retardatrice (10) présente un coefficient de dispersion supérieur à quinze picosecondes par nanomètre et par kilomètre.

4/ Dispositif retardateur selon la revendication 2, caractérisé par le fait que ladite source optique accordable est un laser semi-conducteur multisection (2).

5/ Dispositif retardateur selon l'une quelconque des revendications 2 à 4, caractérisé par le fait que lesdits signaux d'entrée et de sortie sont des signaux électriques d'hyperfréquences.

6/ Système de transmission pour transmettre un signal d'une zone d'entrée (2, 4, 6, 8) à une zone de sortie (12) à distance de cette zone d'entrée, ce signal constituant un signal à transmettre et devant être retardé de manière commandée, ce système de transmission comportant une fibre optique de transmission s'étendant de cette zone d'entrée à cette zone de sortie pour transmettre ce signal sous une forme optique, ce système étant caractérisé par le fait qu'il constitue un dispositif retardateur selon l'une quelconque des revendications 2 à 5, ledit signal à retarder étant constitué par ledit signal à transmettre, et ladite fibre optique retardatrice (10) étant constituée par ladite fibre optique de transmission.

7/ Système d'antenne à réseau comportant :
- un réseau d'antennes élémentaires (50A, 50B...) pour émettre ou recevoir des ondes radioélectriques libres d'hyperfréquences en recevant ou en fournissant des signaux électriques d'hyperfréquences correspondant à ces ondes, respectivement,
- un circuit central (52) pour émettre ou recevoir lesdits signaux électriques d'hyperfréquences vers ou à partir desdites antennes élémentaires, respectivement,
- et des lignes composites (2A, 4A, 10A, 12A, 2B, 4B, 10B, 12B) correspondant respectivement auxdites antennes élémentaires pour transmettre chacune lesdits signaux électriques d'hyperfréquences avec un retard commandé entre ladite antenne élémentaire correspondante et ledit circuit central, chacune de ces lignes composites (2A, 4A, 10A, 12A) comportant elle même :

- un émetteur électro-optique modulable (2A, 4A) pour recevoir un signal d'entrée constitué par un dit signal électrique d'hyperfréquence et pour fournir en réponse un signal optique modulé par ce signal d'entrée,

- une fibre optique retardatrice (10A) pour recevoir en entrée ledit signal optique modulé et pour le guider en lui appliquant un retard,

- un récepteur optoélectrique (12A) pour recevoir ledit signal optique modulé en sortie de ladite fibre optique retardatrice et pour fournir un dit signal électrique d'hyperfréquence constituant un signal de sortie représentatif de la modulation qui affectait ce signal optique,

- et des moyens de commande de retard pour commander ledit retard appliqué par ladite fibre optique retardatrice,

ce système d'antenne étant caractérisé par le fait que ledit émetteur électro-optique comporte ;

- une source optique accordable (2A) pour fournir un signal optique à fréquence commandée,

- et des moyens de modulation (4A) pour que ledit signal optique à fréquence commandée soit modulé par ledit signal d'entrée,

- lesdits moyens de commande de retard comportant des moyens de commande de fréquence (58) pour commander la fréquence optique de ladite source optique dans une bande de fréquences optiques de service,

- ladite fibre optique retardatrice (10A) présentant une dispersion chromatique sensible dans ladite bande de fréquences optiques de service.

# FIG. 1

# FIG. 2

EP 0 392 416 A1

FIG. 3

EP 0 392 416 A1

Office européen
des brevets

**RAPPORT DE RECHERCHE EUROPEENNE**

Numero de la demande

EP  90 10 6745

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 028 702  (A.M. LEVINE)<br>* En entier *<br>--- | 1 | H 03 H    2/00<br>H 01 Q    3/26 |
| A | AP-S INTERNATIONAL SYMPOSIUM DIGEST - ANTENNAS AND PROPAGATION, Blacksburg, VA, 15-19 juin 1987, vol. 1, pages 422-425, IEEE, New York, US; T.R. JOSEPH et al.: "Applications of microwave fiber optic links"<br>* En entier *<br>----- | 1 | |

**DOMAINES TECHNIQUES RECHERCHES (Int. Cl.5)**

H 03 H
H 01 Q

Le présent rapport a été établi pour toutes les revendications

| Lieu de la recherche | Date d'achèvement de la recherche | Examinateur |
|---|---|---|
| LA HAYE | 24-07-1990 | COPPIETERS C. |